# EUROPÄISCHE PATENTSCHRIFT

(11) **EP 3 619 066 B1**
(45) Veröffentlichungstag und Bekanntmachung des Hinweises auf die Patenterteilung: **30.08.2023**
(21) Anmeldenummer: 18719481.6
(22) Anmeldetag: 11.04.2018
(51) Int. Cl.: B60G 17/056, F15B 11/042, B60G 17/015, B60G 17/052, F04B 25/00, F04B 41/06, F04B 49/08, F04B 49/22, F15B 21/048, F15B 21/041

(54) **DRUCKREGELANLAGE MIT EINER DROSSELANORDNUNG**
PRESSURE CONTROL SYSTEM HAVING A THROTTLE ASSEMBLY
SYSTÈME DE RÉGULATION DE LA PRESSION COMPRENANT UN ENSEMBLE D'ÉTRANGLEMENT

(30) Priorität: 05.05.2017 DE 102017004414
(43) Veröffentlichungstag der Anmeldung: 11.03.2020
(73) Patentinhaber: ZF CV Systems Europe BV, 1170 Brussels (BE)
(72) Erfinder: STABENOW, Uwe, 30880 Laatzen (DE); SCHARPENBERG, Jörg, 30938 Burgwedel (DE)
(74) Vertreter: Rabe, Dirk-Heinrich
(86) Internationale Anmeldenummer: PCT/EP2018/059279
(87) Internationale Veröffentlichungsnummer: WO 2018/202392

(56) Entgegenhaltungen:
- WO-A1-02/086327
- DE-A1-102011 084 921
- DE-A1-102012 005 303
- DE-A1-102012 006 382
- DE-A1-102014 012 646
- DE-A1-102015 222 230
- DE-C3- 2 056 635
- US-A- 4 335 867

## Beschreibung

Die Erfindung betrifft eine Druckregelanlage mit einer Drosselanordnung, insbesondere für eine Druckregelanlage mit einem mehrstufigen Kompressor in einem Fahrzeug, insbesondere in einem Personenkraftwagen.

Mehrstufige Kompressoren dienen dazu, eine hohe Verdichtung eines Druckmittels, insbesondere eines Gases, beispielsweise Luft, dadurch zu erreichen, dass das in einer ersten Verdichtungsstufe vorverdichtete Druckmittel in einer darauffolgenden zweiten Verdichtungsstufe zusätzlich verdichtet wird. Es können auch weitere Verdichtungsstufen in einer Kaskade vorhanden sein, in denen jeweils das von der vorhergehenden Verdichtungsstufe verdichtete Druckmittel weiter verdichtet wird.

Sollen Verbraucher beispielsweise einer Luftfederanlage oder einer Niveauregelanlage in einem Fahrzeug mit dem Druckmittel versorgt werden, kann ein derartiger mehrstufiger Kompressor verwendet werden, um das Druckmittel mit einem entsprechenden Druck zum Versorgen von Druckfedern bereitzustellen. Der mehrstufige Kompressor verdichtet dabei das in einen Ansaugraum eingeleitete Druckmittel aus der Atmosphäre über zwei oder mehrere Verdichtungsstufen und überführt das mehrstufig verdichtete Druckmittel an die Druckfedern. Alternativ kann auch ein bereits verdichtetes Druckmittel aus einem Druckmittelvorrat verwendet werden, das durch den mehrstufigen Kompressor ein weiteres Mal verdichtet wird.

Dies ist beispielsweise in DE 10 2008 034 240 B4 beschrieben, wonach eine Niveauregelanlage vorgesehen ist, bei der ein mehrstufiger Kompressor verwendet wird, um das Druckmittel aus der Atmosphäre oder aus einem Druckmittelvorrat zu fördern, wobei zwei Verdichtungsstufen vorgesehen sind. Wird Druckmittel aus der Atmosphäre verdichtet, wird das Druckmittel durch beide Verdichtungsstufen geleitet, während bei einer Förderung des Druckmittels aus dem Druckmittelvorrat eine Verdichtung des dem Verbraucher zugeführten Druckmittels lediglich mit der zweiten Verdichtungsstufe stattfindet. Um in diesem Fall die Verdichtungsarbeit der ersten Verdichtungsstufe zu reduzieren oder zu sperren, ist ein als 2/2-Wegeventil ausgeführtes Sperrventil vorgesehen, das bei einer Förderung aus dem Druckmittelvorrat eine Förderung von verdichtetem Druckmittel aus der ersten Verdichtungsstufe zur zweiten Verdichtungsstufe verhindert. Das Sperrventil wird hierbei elektrisch über eine Steuereinrichtung angesteuert.

Die DE 103 21 771 A1 beschreibt einen mehrstufigen Kompressor, bei dem zur Abschaltung der ersten Verdichtungsstufe eine Bypassleitung mit einem pneumatisch steuerbaren Sperrventil vorgesehen ist, die einen Ansaugraum des Kompressors mit dem ersten Verdichtungsraum verbindet. Das pneumatische Sperrventil wird hierbei in Abhängigkeit des Druckes im Ansaugraum geöffnet, so dass ein Druckausgleich zwischen dem Ansaugraum und dem Verdichtungsraum stattfinden kann. Dies dient dazu, die erste Verdichtungsstufe in Abhängigkeit des Druckes des in den Ansaugraum eingelassenen Druckmittels abzuschalten. Dadurch kann in Abhängigkeit des eingelassenen Druckmittels im einstufigen Betrieb eine hohe Verdichtung bei einem geringen Volumenstrom erreicht werden. Im zweistufigen Betrieb hingegen wird ein hoher Volumenstrom erreicht und das Druckmittel durchströmt zwei Verdichtungsstufen.

Gemäß DE 10 2011 083 614 A1 ist vorgesehen, in einem offenen Betriebsmodus Luft durch zwei Verdichtungsstufen zu verdichten und die verdichtete Luft einem Druckmittelvorrat zuzuführen. In einem geschlossenen Betriebsmodus kann die bereits verdichtete Luft aus dem Druckmittelvorrat in ein Zwischenvolumen zwischen der ersten und der zweiten Verdichtungsstufe eingelassen und durch eine der Verdichtungsstufen erneut verdichtet werden, um anschließend in die Verbraucher zu gelangen. Weiterhin ist auch eine Rückführung von Luft aus den Verbrauchern in den Druckmittelvorrat vorgesehen. Zum Steuern sind elektrisch betätigte Umschaltventile vorgesehen, die entsprechend die Strömungswege für die verdichtete oder die zu verdichtende Luft sperren und freigeben.

DE 10 2012 010 390 A1 beschreibt ein Niveauregelsystem, bei dem in einem geschlossenen Betriebsmodus über einen Kompressor bereits verdichtete Luft aus einem Druckvorratsbehälter in als Federbeine ausgeführte Verbraucher zugeführt wird. Zum Steuern des Druckes im Niveauregelsystem ist eine Druckbegrenzungsfunktion vorgesehen, die entweder in Form eines Ablassventils oder in Form eines Vorsteuerventils ausgestaltet ist, die jeweils bei einem zu hohen Druck im System Luft in die Atmosphäre ablassen.

Die DE102012005303A1 betrifft eine Druckluftversorgungsanlage zum Betreiben einer Pneumatikanlage, insbesondere einer Luftfederanlage eines Fahrzeugs, aufweisend: eine Druckluftzuführung, einen Druckluftanschluss zur Pneumatikanlage, einen Entlüftungsanschluss zur Umgebung, eine pneumatische Hauptleitung zwischen der Druckluftzuführung und dem Druckluftanschluss, die einen Lufttrockner und eine erste Drossel aufweist, eine Entlüftungsleitung zwischen dem Druckluftanschluss und dem Entlüftungsanschluss, die eine zweite Drossel aufweist. Die Nennweite der ersten Drossel und die Nennweite der zweiten Drossel für die Entlüftung der Druckluftversorgungsanlage sind druckabhängig einstellbar. Die DE102012005303 A1 zeigt den Oberbegriff des Anspruchs 1.

Die DE102011084921A1 betrifft eine Kompressorschaltung für eine pneumatische Regelvorrichtung eines Fahrzeugs, umfassend einen Kompressor und einen Druckregler. Der Druckregler ist zwischen einer Eingangsseite des Kompressors und der pneumatischen Regelvorrichtung angeordnet, wobei der Druckregler dazu ausgebildet ist, einen an seiner der pneumatischen Regelvorrichtung zugewandten Seite anliegenden Vordruck von Luft der pneumatischen Regelvorrichtung zu messen und diese Luft mit einem Eingangsdruck der Eingangsseite des Kompressors zuzuführen, wobei der Druckregler dazu ausgebildet ist, den Eingangsdruck des Kompressors in Abhängigkeit von der Messung zu regeln.

Die DE102012006382A1 betrifft eine Druckmittelversorgungsanlage zum Betreiben einer Pneumatikanlage, aufweisend eine Druckmittelzuführung, einen Druckmittelanschluss, einen Entlüftungsanschluss sowie wenigstens einen Druckmittelladeanschluss zur Pneumatikanlage sowie eine Ansaugleitung, eine Verdichterleitung, eine Entlüftungsleitung und wenigstens eine Druckmittelladeleitung. Eine Ladeanordnung ist ausgebildet, zur gleichzeitigen Führung von am wenigstens einen Druckmittelladeanschluss anstehenden geladenen Druckmittels und von der ersten Verdichterstufe eines zwei- oder mehrstufigen Verdichters in der Ladeanordnung zur Verfügung gestellten weiteren Druckmittels zur zweiten Verdichterstufe des Verdichters, wobei eine elektrisch einstellbare Drossel in der Druckmittelladeleitung angeordnet ist.

Die WO2002086327A1 betrifft ein Steuersystem und ein Verfahren zum Steuern eines Druckmedienkreislaufs, der zur Geschwindigkeitssteuerung und / oder Positionssteuerung eines durch ein mit mit Flüssigkeits-Druckmedium angetriebenen Aktuators angeordnet ist. Der Druckmedienkreislauf umfasst eine erste Verbindung zwischen einem Eingangsanschluss und einem ersten Arbeitsanschluss, einen zweiten Anschluss zwischen einem Ausgangsanschluss und einem zweiten Arbeitsanschluss und Ventileinrichtung zum Leiten des Volumenstroms der Verbindungen, wobei die Ventileinrichtung mindestens einen ersten Satz und mindestens einen zweiten Satz von gekoppelten steuerbaren Ventilen umfasst. Die steuerbaren Ventile sind dabei parallel gekoppelt, um den Volumenstrom des Satzes von steuerbaren Ventilen zu steuern, um einen Wirkzylinder in der Arbeitsgeschwindigkeit zu beeinflussen.

Die US4335867A offenbart ein Aktuatorsystem, das eine lineare Ausgangswelle, die einem Arbeitssteuerventil oder dergleichen zugeordnet ist, als Reaktion auf einen Steuersignal-eingang moduliert. Das System umfasst eine Rückkopplungssteuerungsverbindung, einen pneumatischen Stellungsregler, ein pneumatisch gesteuertes hydraulisches Ventilsystem und eine vom hydraulischen Ventilsystem gesteuerte hydraulische Zylinder- und Kolben-anordnung. Das hydraulische Ventilsystem umfasst ein Dreiwege-Vierwegeventil, das durch pneumatische binäre Ausgangssignale von einem Signalaufbereiter betätigt wird, der wiederum vom Stellungsregler gesteuert wird. Der Hydraulikfluss zum Dreiwege-Vierwegeventil kann auch vom Signalaufbereiter als Reaktion auf den Stellungsreglerausgang gesteuert werden, um die Hydraulikzylinder-und Kolbenbaugruppe am effektivsten zu betätigen.

Die DE2056635C3 offenbart Druckmittelfederung mit Niveauregelung für ein Doppelachsaggregat von Fahrzeugen, bei der die Druckmittelfedern beider unabhängig voneinander an einem Fahrzeugaufbau aufgehängten Radachsen zumindest auf jeder Fahrzeuglängsseite durch Ausgleichsleitungen miteinander verbunden sind und bei der jeder Radachse zumindest ein ausschließlich auf Abstandsänderungen zwischen dieser Radachse und dem Fahrzeugaufbau ansprechendes Niveauregelventil zugeordnet ist, das gemeinsam mit dem entsprechenden Niveauregelventil der jeweils anderen Radachse die angeschlossenen Druckmittelfedern beider Radachsen in einer bei einer Abslandsverminderung eingenommenen Aufregelstellung mit einer Druckmittelquelle und in einer bei einer Abstandsvergrößerung eingenommenen Abregelstellung mit einem drucklosen Auslaß verbinden kann, wobei eine Verbindung der Druckmittelfedern mit dem drucklosen Auslaß nur dann erfolgt, wenn beide Niveauregelveniile sich in ihrer Abregelstellung befinden, wobei jeweils die beiden zusammenarbeitenden Niveauregelventile beider Radachsen einander über zusätzliche Absperrventile parallel geschaltet sind, wobei die Absperrventile jeweils die Verbindung des einen Niveauregelventils zu den angeschlossenen Druckmittelfedern nur dann absperren, wenn dieses Niveauregelventil sich in der Abregelstellung befindet, das andere Niveauregelventil aber nicht.

Es ist Aufgabe der Erfindung, eine Druckregelanlage für ein Fahrzeug, insbesondere ein Personenkraftwagen, mit einer Drosselanordnung und mit einem mehrstufigen Kompressor bereitzustellen, mit der eine Abstimmung einer Verdichtungsleistung sowie eines verdichteten Volumenstroms der Druckregelanlage in einfacher und zuverlässiger Weise gewährleistet werden kann.

Diese Aufgabe wird durch eine Druckregelanlage mit einer Drosselanordnung nach Anspruch 1 gelöst. Die Unteransprüche geben vorteilhafte Weiterbildungen an.

Erfindungsgemäß ist demnach vorgesehen, eine Druckregelanlage mit einer Drosselanordnung bereitzustellen, die mindestens ein steuerbares Drosselventil aufweist, wobei ein Eingangs-Volumenstrom, d. h. eine Partikelmenge pro Zeit, eines in die Drosselanordnung eingehenden Druckmittels durch eine Ansteuerung des mindestens einen Drosselventils auf einen Grenz-Volumenstrom begrenzt werden kann. Erfindungsgemäß wird dazu das mindestens eine steuerbare Drosselventil in Abhängigkeit eines Vordruckes derartig umgeschaltet, d.h. geöffnet oder geschlossen, dass sich eine effektive Anordnungs-Nennweite bzw. ein durch die Drosselanordnung effektiv ausgebildeter Anordnungs-Querschnitt, der angibt, welcher Strömungswiderstand auf ein in die Drosselanordnung eingehendes Druckmittel wirkt, verändert.

Die Drosselanordnung wird dazu in einer zu einem pneumatischen Verbraucher führenden Druckmittelleitung angeordnet. Das in die Drosselanordnung eingehende Druckmittel ist somit das durch die Druckmittelleitung zum pneumatischen Verbraucher zu fördernde Druckmittel, das an einem Drosseleingang der Drosselanordnung einen definierten Eingangs-Volumenstrom bei einem gewissen Eingangs-Druck aufweist. Dem pneumatischen Verbraucher wird dann ein durch die Drosselanordnung volumenstrombegrenztes ausgehendes Druckmittel, ein Ausgangs-Druckmittel, mit einem Ausgangs-Volumenstrom, der kleiner gleich dem Grenz-Volumenstrom ist, zugeführt.

Dadurch kann bereits der Vorteil erreicht werden, dass eine Überlastung des pneumatischen Verbrauchers, beispielsweise eines mehrstufigen Kompressors einer Druckregelanlage, durch einen zu hohen Volumenstrom des in der Druckmittelleitung geförderten Druckmittels vermieden werden kann. Dies wird erfindungsgemäß dadurch gewährleistet, dass der Eingangs-Volumenstrom des eingehenden Druckmittels durch eine vordruckabhängige Einstellung des Anordnungs-Querschnitts der Drosselanordnung auf den Grenz-Volumenstrom begrenzt wird. Der Grenz-Volumenstrom wird dazu vorzugsweise in Abhängigkeit davon gewählt, welchem Volumenstrom der pneumatische Verbraucher im aktuellen Betriebsmodus maximal ausgesetzt werden sollte, ohne dass eine Überlastung, insbesondere durch einen zu hohen Energieverbrauch, auftritt. Als Vordruck kann dazu beispielsweise der Eingangs-Druck oder ein aus dem pneumatischen Verbraucher in Strömungsrichtung ausgehender Verdichtungs-Druck verwendet werden, die jeweils ein Maß für die aktuelle bzw. die zu erwartende Belastung des pneumatischen Verbrauchers sind.

Die Drosselanordnung kann hierbei in der Druckregelanlage eines Fahrzeuges, insbesondere eines Personenkraftwagens, in einer Aufladeleitung angeordnet sein, über die in einem geschlossenen Betriebsmodus ein bereits verdichtetes Aufladedruckmittel mit einem Auflade-Volumenstrom in eine beliebige Verdichtungsstufe des mehrstufigen Kompressor zum erneuten Verdichten gefördert wird, wobei der mehrstufige Kompressor in Abhängigkeit der Höhe des Auflade-Volumenstroms unterschiedlich stark belastet wird, um das Aufladedruckmittel erneut zu verdichten. Die Drosselanordnung sorgt vorteilhafterweise dafür, dass der Auflade-Volumenstrom des bereits verdichteten Aufladedruckmittels in Abhängigkeit eines Vordruckes begrenzt und der mehrstufige Kompressor somit nicht überlastet wird, wobei eine Überlastung beispielsweise dadurch auftreten kann, dass bei einem zu hohen Volumenstrom von einem die Verdichtungsstufen antreibenden Motor ein zu hohes Drehmoment gefordert wird und dadurch ein benötigter Strom über eine Strombegrenzung von beispielsweise 35A ansteigt. Somit kann eine Leistungsaufnahme des mehrstufigen Kompressors im geschlossenen Betriebsmodus der Druckregelanlage an die Leistungsgrenze angepasst werden. Dies kann zur Optimierung des mehrstufigen Kompressors verwendet werden, so dass eine optimale Abstimmung insbesondere des Verdichtungs-Volumenstroms aus der zweiten bzw. letzten Verdichtungsstufe erfolgen kann. Ziel der Erfindung ist somit, durch die Verwendung der Drosselanordnung den mehrstufigen Kompressor immer möglichst nahe an der Leistungsgrenze zu betreiben, wobei dazu optimaler Weise eine fein abgestufte Anpassung des Anordnungs-Querschnitts gewünscht ist.

Als Vordruck wird beispielsweise der in Strömungsrichtung vor der Drosselanordnung in der Aufladeleitung wirkende Auflade-Druck verwendet oder der am Ausgang des mehrstufigen Kompressors wirkende Verdichtungs-Druck, mit dem die angeschlossenen Verbraucher, beispielsweise Luftfedern, versorgt werden. Beide Größen sind jeweils ein Maß für die Leistungsaufnahme und somit die aktuelle Belastung oder die zu erwartende Belastung des mehrstufigen Kompressors.

Die Einstellung des Anordnungs-Querschnittes in Abhängigkeit des Vordruckes dient somit dazu, den an einem Drosselausgang der Drosselanordnung vorherrschenden Ausgangs-Volumenstrom auf den pneumatischen Verbraucher abzustimmen und somit einen optimalen Betrieb des pneumatischen Verbrauchers zu gewährleisten:
Liegt beispielsweise ein hoher Eingangs-Volumenstrom des eingehenden Druckmittels durch einen hohen Eingangs-Druck als Vordruck vor, wird durch Schließen mindestens eines Drosselventils ein geringer Anordnungs-Querschnitt eingestellt. Durch den niedrig gewählten Anordnungs-Querschnitt kann ein den Grenz-Volumenstrom überschreitender Eingangs-Volumenstrom zumindest auf den Grenz-Volumenstrom abgesenkt werden. Die Drosselanordnung gibt dann ein Ausgangs-Druckmittel mit einem Ausgangs-Volumenstrom an den pneumatischen Verbraucher aus, der maximal dem Grenz-Volumenstrom entspricht.

Bei einem geringen Eingangs-Volumenstrom des eingehenden Druckmittels und einem niedrigen Eingangs-Druck als Vordruck wird entsprechend ein hoher Anordnungs-Querschnitt eingestellt. Dadurch wird der Eingangs-Volumenstrom weniger stark reduziert als bei einem geringen Anordnungs-Querschnitt, wobei der Anordnungs-Querschnitt in diesem Fall so gewählt ist, dass der niedrige Eingangs-Volumenstrom nur dann reduziert wird, wenn dieser den Grenz-Volumenstrom auch überschreitet. Ist dies nicht der Fall, wird der Eingangs-Volumenstrom direkt als Ausgangs-Volumenstrom an den pneumatischen Verbraucher ausgegeben. Eine Reduzierung des Eingangs-Volumenstroms ergibt sich dann allenfalls durch Verluste aufgrund des Durchströmens der Leitungen und Drosselventile in der Drosselanordnung.

Der Anordnungs-Querschnitt wird somit vorteilhafterweise derartig gewählt, dass der Eingangs-Volumenstrom des eingehenden Druckmittels nicht unnötig reduziert wird und der pneumatische Verbraucher gleichzeitig durch einen zu hohen Ausgangs-Volumenstrom nicht überlastet wird. Denn der auf einen hohen Eingangs-Volumenstrom abgestimmte Anordnungs-Querschnitt, mit der eine Überlastung des pneumatischen Bauteils bei hohen Eingangs-Volumenströmen vermieden wird, reduziert unter Umständen auch einen niedrigen Eingangs-Volumenstrom eines eingehenden Druckmittels, der aber bereits unter dem Grenz-Volumenstrom liegt und somit nicht zu einer Überlastung des pneumatischen Verbrauchers führt.

Gegenüber einem fest eingestellten Drosselventil mit einem festen Drosselventil-Querschnitt, der auf lediglich hohe Eingangs-Volumenströme abgestimmt ist, kann somit mit der erfindungsgemäßen Drosselanordnung über den Vordruck ein auf den aktuellen Betrieb bzw. eine aktuelle Belastung des pneumatischen Verbrauchers abgestimmter Anordnungs-Querschnitt und somit ein optimierter Ausgangs-Volumenstrom bei einem entsprechenden Ausgangs-Druck zum Ausgeben an den pneumatischen Verbraucher eingestellt werden.

Um dies zu erreichen, kann die Drosselanordnung bzw. das mindestens eine DrosselVentil in Abhängigkeit des Vordruckes, der eine tatsächlich vorliegende, im Betrieb messbare Größe bezüglich der aktuell zu erwartenden Belastung des pneumatischen Verbrauchers darstellt, folgendermaßen ausgebildet und angesteuert werden:
Gemäß einer ersten Ausführungsform weist die Drosselanordnung ein nicht-steuerbares Drosselventil mit einem ersten Drosselventil-Querschnitt und parallel dazu geschaltet ein steuerbares Drosselventil mit einem zweiten Drosselventil-Querschnitt auf. Das nicht-steuerbare Drosselventil befindet sich dauerhaft in der geöffneten Stellung. Das nicht-steuerbare Drosselventil kann aber auch durch ein steuerbares Drosselventil ersetzt werden. Das steuerbare Drosselventil ist in Abhängigkeit des Vordruckes pneumatisch oder elektrisch ansteuerbar, wobei das steuerbare Drosselventil über die Ansteuerung umgeschaltet, d.h. vollständig geöffnet oder vollständig geschlossen werden kann. Die Parallelschaltung der beiden Drosselventile kann auch um weitere parallel geschaltete und steuerbare Drosselventile erweitert werden, um somit vielfache Drosselabstufungen zu generieren, die eine fein abgestufte Anpassung des Anordnungs-Querschnitts erlaubt.

Der effektive Anordnungs-Querschnitt, der auf das eingehende Druckmittel wirkt, ergibt sich hierbei aus der Summe der Drosselventil-Querschnitte aller parallel zueinander geschalteten Drosselventile, die sich in der geöffneten Stellung befinden. Die Auswirkungen auf das eingehende Druckmittel sind vergleichbar zu einer Parallelschaltung von Widerständen:
Je mehr Drosselventile in die geschlossene Stellung umgeschaltet sind, desto kleiner wird der effektive Anordnungs-Querschnitt, der dem eingehenden Druckmittel zur Verfügung steht, um durch die Drosselanordnung zu gelangen, d.h. desto höher ist der auf das Druckmittel wirkende Strömungswiderstand. Der effektive Anordnungs-Querschnitt verringert sich also mit jedem geschlossenen Drosselventil der Parallelschaltung, so dass durch ein Ansteuern des oder der Drosselventile in Abhängigkeit des Vordruckes der entsprechend vorliegende Eingangs-Volumenstrom des eingehenden Druckmittels reduziert werden kann, um diesen auf oder unter den Grenz-Volumenstrom zu reduzieren.

Die Ansteuerung des oder der schaltbaren Drosselventile erfolgt direkt über den pneumatisch vorgegebenen Vordruck oder durch ein elektrisches Signal, das in Abhängigkeit des Vordruckes erzeugt wird. Ist der Vordruck höher als ein dem schaltbaren Drosselventil zugeordneten Schließdruck, wird das schaltbare Drosselventil geschlossen. D.h. das in die Drosselanordnung eingehende Druckmittel hat nun ein Drosselventil in der Parallelschaltung weniger zur Verfügung, um durch die Drosselanordnung zu strömen, der Anordnungs-Querschnitt verringert sich effektiv, wodurch ein reduzierter Ausgangs-Volumenstrom bereitgestellt wird, der dem mehrstufigen Kompressor als Auflade-Volumenstrom zugeführt werden kann.

Erindungsgemäß erfolgt eine mehrstufige Anpassung in einer Parallelschaltung von mehreren steuerbaren Drosselventilen. Dazu werden mit ansteigendem Vordruck nacheinander Drosselventile in der Parallelschaltung geschlossen, wodurch sukzessive der Anordnungs-Querschnitt der Drosselanordnung reduziert wird. Jedem schaltbaren Drosselventil ist hierbei ein anderer Schließdruck zugeordnet. Somit kann je nach Aufbau der Parallelschaltung von Drosselventilen in der Drosselanordnung eine mehrstufige Regelung erreicht werden, um den pneumatischen Verbraucher möglichst effizient ausnutzen zu können, ohne diesen zu überlasten, und diesen immer knapp unterhalb oder an der Leistungsgrenze betreiben zu können.

Im Strömungspfad vor der Drosselanordnung ist mindestens ein Schaltventil angeordnet, mit dem das zur Drosselanordnung über die Druckmittelleitung strömende Druckmittel beispielsweise elektronisch oder pneumatisch gesteuert freigegeben werden kann. Alternativ kann für den Fall, dass alle Drosselventile elektrisch steuerbar sind und das Aufladedruckmittel aus lediglich einer Aufladequelle stammt, d.h. entweder nur aus dem Druckmittelvorrat oder nur aus den Verbrauchern, das Schaltventil entfallen, da durch das elektrische Schließen aller Drosselventile ein Durchströmen der Drosselanordnung und somit eine Freigabe des Aufladedruckmittels vollständig verhindert werden kann, wobei die elektronische Ansteuerung der Drosselventile dann durch eine Software-Logik erfolgen kann, die die Drosselventile entweder alle schließt, um ein Durchströmen zu verhindern, oder einzeln in Abhängigkeit des Vordruckes, um den Eingangs-Volumenstrom entsprechend zu reduzieren.

In der Druckregelanlage kann dadurch eine Freigabe des Aufladedruckmittels erreicht werden, so dass dieses über die Drosselanordnung zum mehrstufigen Kompressor strömen kann. Dieses Schaltventil legt gleichzeitig durch seine Schaltventil-Nennweite bzw. durch seinen Schaltventil-Querschnitt den maximalen Eingangs-Volumenstrom des in die Drosselanordnung eingehenden Druckmittels fest. Der Schaltventil-Querschnitt kann hierbei hoch gewählt werden, da die Belastung des pneumatischen Verbrauchers nachfolgend über die mit dem Schaltventil in Reihe geschaltete Drosselanordnung eingestellt wird. Insbesondere kann der Schaltventil-Querschnitt auf niedrige Eingangsdrücke ausgelegt werden, so dass durch das Schaltventil vorteilhafterweise keine unnötige Reduzierung des Eingangs-Volumenstroms stattfindet.

Die Drosselventil-Querschnitte der einzelnen Drosselventile in der Drosselanordnung können dann derartig ausgelegt sein, dass eine Summe der Drosselventil-Querschnitte - d.h. der Anordnungs-Querschnitt, wenn alle Drosselventile geöffnet sind - den Schaltventil-Querschnitt nicht überschreitet, da ein höherer Anordnungs-Querschnitt dann keine Auswirkungen mehr auf den Eingangs-Volumenstrom des eingehenden Druckmittels hat. Dadurch kann vorteilhafterweise der Anordnungs-Querschnitt ausgehend von dem Schaltventil-Querschnitt sukzessive reduziert werden, da für den Fall, dass alle parallel geschalteten Drosselventile in der Drosselanordnung geöffnet sind der Anordnungs-Querschnitt gleich dem Schaltventil-Querschnitt ist. Der von dem Schaltventil in die Drosselanordnung eingehende Eingangs-Volumenstrom wird dann lediglich durch das Durchströmen der jeweiligen Drosselventile und der Leitungen in der Drosselanordnung, d. h. im Wesentlichen durch Verluste, geringfügig reduziert. Bei einem Schließen einzelner Drosselventile, verringert sich der Anordnungs-Querschnitt ausgehend von dem Schaltventil-Querschnitt entsprechend.

Gemäß einer alternativen, nicht erfindungsgemäßen Ausführungsform kann die Drosselanordnung lediglich ein steuerbares Drosselventil aufweisen, das als Doppelanker-Ventil ausgeführt ist. In diesem kann in Abhängigkeit des Vordruckes entweder ein erster Anker oder ergänzend parallel oder in Reihe dazu geschaltet ein zweiter Anker geschaltet werden, wobei jeder Anker vorzugsweise einen unterschiedlichen Anker-Querschnitt aufweist. Dadurch kann vorteilhafterweise ein kleiner und kompakter Aufbau erreicht werden, da durch die beiden Anker zwischen zwei unterschiedlichen Anordnungs-Querschnitten umgeschaltet werden kann, wenn der Vordruck einen Grenzdruck unter- oder übersteigt, und für dieses Umschalten lediglich eine Spule des Doppelanker-Ventils nötig ist.

Gemäß einer ersten, nicht erfindungsgemäßen Ausführungsform sind die beiden Anker parallel zueinander geschaltet. Jeder Anker kann dabei in eine geschlossene Stellung oder eine geöffnete Stellung überführt werden. Ist lediglich der erste Anker in die geöffnete Stellung geschaltet, wird der Anordnungs-Querschnitt lediglich durch einen ersten Anker-Querschnitt bestimmt, während bei einer Öffnung lediglich des zweiten Ankers ein zweiter Anker-Querschnitt maßgeblich ist. Werden beide Anker gleichzeitig geöffnet, ergibt sich der Anordnungs-Querschnitt aus der Summe beider Anker-Querschnitte, die je nach Anforderung gleich oder unterschiedlich sein können.

Gemäß einer alternativen, nicht erfindungsgemäßen Ausführungsform sind beide Anker in Reihe geschaltet. Weiterhin ist gemäß dieser Ausführung eine den ersten Anker überbrückende Umgehungsleitung vorgesehen, die einen Umgehungs-Querschnitt aufweist, der geringer ist als der erste und der zweite Anker-Querschnitt, wobei die Summe des ersten Anker-Querschnittes und des Umgehungs-Querschnittes mindestens so groß ist wie der zweite Anker-Querschnitt. Wird der zweite Anker geöffnet und bleibt der erste Anker geschlossen, strömt das Druckmittel durch die Umgehungsleitung in den zweiten Anker und der Anordnungs-Querschnitt wird aufgrund der Reihenschaltung durch den geringeren der beiden Querschnitte, in dem Fall durch den Umgehungs-Querschnitt, bestimmt. Wird jedoch auch der erste Anker geöffnet, strömt das Druckmittel sowohl durch den ersten Anker als auch durch die Umgehungsleitung, die in einer Parallelschaltung angeordnet sind, in den zweiten Anker. In dem Fall ist die Summe aus dem ersten Anker-Querschnitt und dem Umgehungs-Querschnitt (Parallelschaltung) größer als oder gleich dem zweiten Anker-Querschnitt (Reihenschaltung), so dass der Anordnungs-Querschnitt durch den zweiten Anker-Querschnitt bestimmt wird. Alternativ könnte auch der erste Anker-Querschnitt zusammen mit dem Umgehungs-Querschnitt den minimalen Querschnitt bestimmen. Weiterhin kann die Umgehungsleitung auch statt dem ersten Anker den zweiten Anker überbrücken, mit entsprechend angepassten Querschnitten.

Wird der zweite Anker in dieser Reihenschaltung geschlossen, findet eine Totalabschaltung statt, d.h. durch die Drosselanordnung mit dem Doppelanker-Ventil kann kein Druckmittel strömen.

Alternativ und nicht erfindungsgemäß kann die Umgehungsleitung in der Reihenschaltung der beiden Anker auch wegfallen. Der erste Anker ist dann stattdessen wie ein 3/2-Wegeventil ausgeführt und in einer ersten Schaltstellung des ersten Ankers wird ein erster Druckmittelweg mit einem ersten Wege-Querschnitt freigeschaltet und in einer zweiten Schaltstellung ein zweiter Druckmittelweg mit einem zweiten Wege-Querschnitt. Je nach Schaltstellung ist der erste Anker-Querschnitt somit variabel, wobei der erste Wege-Querschnitt kleiner ist als der zweite Anker-Querschnitt und der zweite Wege-Querschnitt maximal dem zweiten Anker-Querschnitt entspricht. Somit beträgt der Anordnungs-Querschnitt je nach Schaltstellung entweder dem ersten Wege-Querschnitt oder dem zweiten Wege-Querschnitt.

Für eine Totalabschaltung kann der zweite Anker in dieser Ausführungsform in die geschlossene Stellung überführt werden, so dass ein Durchströmen von Druckmittel verhindert wird.

Ist der Eingangs-Volumenstrom also hoch, kann über den entsprechenden EingangsDruck als Vordruck ausgewählt werden, welche der beiden Anker mit welchem Anker-Querschnitt parallel oder in Reihe geschaltet werden, um einen niedrigen Anordnungs-Querschnitt einzustellen, während bei einem niedrigen Eingangs-Volumenstrom für diesen entsprechenden Eingangs-Druck als Vordruck eine andere Schaltstellung der Anker eingestellt wird, um einen hohen Anordnungs-Querschnitt einzustellen. Der Anordnungs-Querschnitt kann somit gemäß dieser Ausführungsform zweistufig in Abhängigkeit des Vordruckes umgestellt werden, je nachdem, ob der Vordruck den Grenzdruck übersteigt oder nicht.

Die Ansteuerung des Doppelanker-Ventils erfolgt durch ein elektrisches Steuersignal, das in Abhängigkeit des Vordruckes vorzugsweise über eine Software-Logik erzeugt wird, wobei der Vordruck mit einem entsprechenden Schließdruck verglichen wird und in Abhängigkeit davon der erste und/oder der zweite Anker geschaltet werden. Über die Software-Logik kann das Doppelanker-Ventil auch in die vollständig geschlossene Stellung überführt werden.

Somit kann in unterschiedlichen Varianten mit einfachen Mitteln eine automatisch gesteuerte Volumenstrombegrenzung gewährleistet werden, die den pneumatischen Verbraucher, beispielsweise den mehrstufigen Kompressor, entsprechend abstimmt, um beispielsweise knapp unterhalb einer Leistungsgrenze, des pneumatischen Verbrauchers arbeiten zu können.

Vorteilhafterweise wird durch die Drosselanordnung ein offener Betriebsmodus der Druckregelanlage, in dem unverdichtetes Druckmittel aus der Atmosphäre durch den mehrstufigen Kompressor verdichtet wird, nicht beeinflusst, da die Drosselanordnung lediglich in dem Teil der Druckregelanlage angeordnet ist, der im offenen Betriebsmodus nicht mit Druckmittel durchströmt wird.

Die Drosselanordnung kann vorteilhafterweise einfach und kostengünstig nachgerüstet werden, da die Drosselanordnung als kompaktes Bauteil in eine vorhandene Druckmittelleitung, beispielsweise die Aufladeleitung der Druckregelanlage, mit einem bereits vorhandenen Schaltventil, das das verdichtete Druckmittel, beispielsweise das Aufladedruckmittel freigibt, eingebaut werden kann. Somit kann der Aufwand zum Nachrüsten gering gehalten werden.

Die Erfindung wird im Folgenden anhand der beiliegenden Zeichnungen näher erläutert. Es zeigen:
- Fig. 1a,: b eine Luftfederanlage mit einem zweistufigen Kompressor in unterschiedlichen Ausführungsformen;
- Fig. 2a, b, c: Drosselanordnungen gemäß einer ersten Ausführungsform; und
- Fig. 3a, b, c: eine Drosselanordnung gemäß einer zweiten, nicht erfindungsgemäßen Ausführungsform mit einem Doppelanker-Ventil.

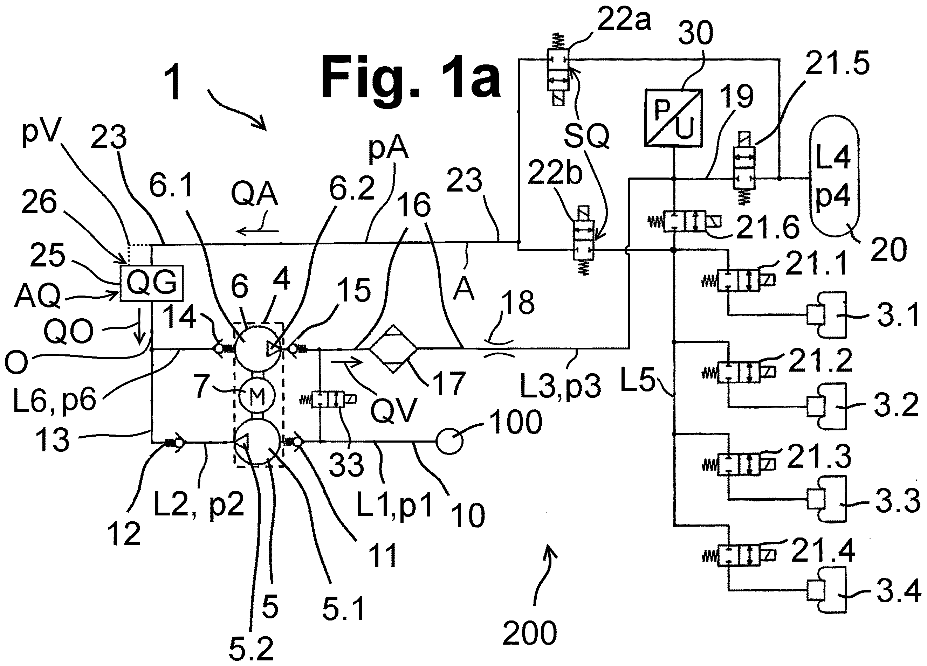

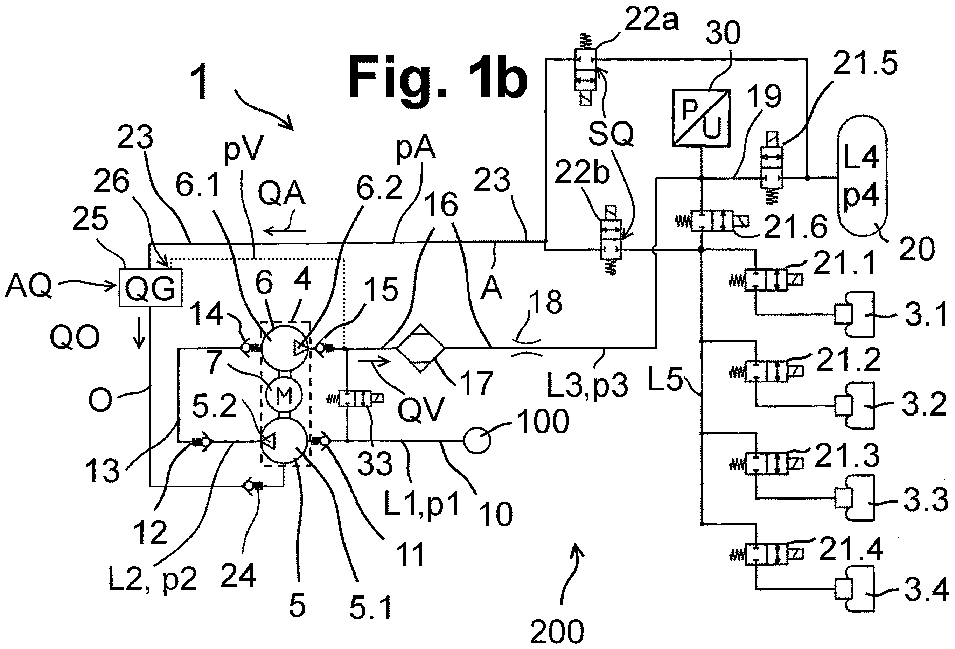

Gemäß den Figuren 1a und 1b ist eine Druckregelanlage, beispielsweise eine Luftfederanlage 1 vorgesehen, die vier Druckmittelkammern 3.1, 3.2, 3.3, 3.4 aufweist, die jeweils einem Verbraucher, beispielsweise Luftfedern eines Fahrzeuges 200, zugeordnet sind. Die Druckmittelkammern 3.i werden mit einem verdichteten Druckmittel L3, beispielsweise Luft, versorgt, wobei das verdichtete Druckmittel L3 in einem zweistufigen Kompressor 4 verdichtet wird.

Der zweistufige Kompressor 4 weist dazu eine erste Verdichtungsstufe 5 sowie eine zweite Verdichtungsstufe 6 auf, die jeweils einen Ansaugraum 5.1, 6.1 und einen Verdichtungsraum 5.2, 6.2 aufweisen, wobei das in den jeweiligen Ansaugraum 5.1, 6.1 einströmende Druckmittel L1, L2, L6 in dem Verdichtungsraum 5.2, 6.2 verdichtet wird. Angetrieben werden die Verdichtungsstufen 5, 6 durch einen Motor 7, der bewirkt, dass sich ein in der jeweiligen Verdichtungsstufe 5, 6 befindlicher Kolben auf- und abbewegt und dadurch das im Ansaugraum 5.1, 6.1 bereitgestellte Druckmittel L1, L2, L6 entsprechend verdichtet wird.

Die Druckregelanlage 1 kann gemäß dieser Ausführung in zwei Betriebsmodi betrieben werden, einem offenen Betriebsmodus Bmo (open mode) und einem geschlossenen Betriebsmodus BMc (closed mode), in denen jeweils Luft als Druckmittel L1, L2, L3, L4, L5, L6 gefördert und verdichtet wird. Im offenen Betriebsmodus Bmo wird Ansaugluft L1 aus der Atmosphäre 100, d. h. Mit einem Luftdruck bzw. Ansaugdruck p1 von ca. 1 bar, über eine Ansaugleitung 10 sowie ein erstes Einlassventil 11 in den ersten Ansaugraum 5.1 der ersten Verdichtungsstufe 5 eingeleitet. Anschließend wird die Ansaugluft L1 zunächst vorverdichtet und dabei in den ersten Verdichtungsraum 5.2 geleitet. Aus dem ersten Verdichtungsraum 5.2 strömt die vorverdichtete Luft L2 mit einem Zwischendruck p2 über ein erstes Auslassventil 12, beispielsweise ein Rückschlagventil, in ein Zwischenvolumen 13.

Aus dem Zwischenvolumen 13 gelangt insbesondere die vorverdichtete Luft L2 über ein zweites Einlassventil 14 in den zweiten Ansaugraum 6.1 der zweiten Verdichtungsstufe 6, in der die vorverdichtete Luft L2 weiter verdichtet und in den zweiten Verdichtungsraum 6.2 eingeleitet wird. Aus der zweiten Verdichtungsstufe 6 gelangt die verdichtete Luft L3 mit einem Verdichtungs-Druck p3 sowie einem Verdichtungs-Volumenstrom VQ über ein zweites Auslassventil 15 in eine Auslassleitung 16 zu einem Lufttrockner 17 und einer Düse 18. Anschließend leitet die Auslassleitung 16 die verdichtete Luft L3 zu den Druckmittelkammern 3.1, 3.2, 3.3, 3.4 der angeschlossenen Verbraucher, beispielsweise der Luftfedern, sowie über eine Vorratsleitung 19 zu einem Druckmittelvorrat 20, in dem die verdichtete Luft L3 als gespeicherte Luft L4 mit einem Vorratsdruck p4, der aufgrund von Verlusten etwas geringer ist als der Verdichtungs-Druck p3, gespeichert wird.

Der Druckmittelvorrat 20 sowie die Druckmittelkammern 3.1, 3.2, 3.3, 3.4 sind jeweils durch ein steuerbares Ventil 21.1, 21.2, 21.3, 21.4, 21.5, 21.6 beispielsweise einem 2/2-Magnetventil, mit der Auslassleitung 16 bzw. der Vorratsleitung 19 verbindbar, so dass je nach Stellung der steuerbaren Ventile 21.i die verdichtete Luft L3 in die Druckmittelkammern 3.1, 3.2, 3.3, 3.4 zum Steuern der Verbraucher oder in den Druckmittelvorrat 20 strömen kann.

Demnach wird die verdichtete Luft L3 bei geöffnetem sechsten Ventil 21.6 sowie geöffnetem ersten Ventil 21.1 in die erste Druckmittelkammer 3.1, bei geöffnetem zweiten Ventil 21.2 in die zweite Druckmittelkammer 3.2, bei geöffnetem dritten Ventil 21.3 in die dritte Druckmittelkammer 3.3 und bei geöffnetem vierten Ventil 21.4 in die vierte Druckmittelkammer 3.4 geleitet, wobei dann das fünfte Ventil 21.5 geschlossen ist und somit keine verdichtete Luft L3 in den Druckmittelvorrat 20 strömen kann.

Befinden sich andererseits die Ventile 21.1, 21.2, 21.3, 21.4, 21.6 in der geschlossen Stellung und das fünfte Ventil 21.5 ist geöffnet, kann durch den Lufttrockner 17 getrocknete und verdichtete Luft L3 in den Druckmittelvorrat 20 eingeleitet und darin gespeichert werden. Eine Drucküberwachung kann über ein Druckmessgerät 30 erfolgen.

Über ein zusätzliches Ablassventil 33 kann die verdichtete Luft L3 in die Atmosphäre 100 abgelassen werden.

Die im Druckmittelvorrat 20 gespeicherte Luft L4 kann im geschlossenen Betriebsmodus BMc als Aufladedruckmittel A in das Zwischenvolumen 13 eingelassen werden, so dass die bereits verdichtete Luft L4 ein weiteres Mal verdichtet wird. Dazu wird gemäß dieser Ausführungsform das fünfte Ventil 21.5 geschlossen und ein erstes Schaltventil 22a geöffnet, das in einer zwischen dem fünften Ventil 21.5 und dem Druckmittelvorrat 20 abzweigenden Aufladeleitung 23 angeordnet ist. Das zweite Schaltventil 22b ist in diesem Fall geschlossen Die Aufladeleitung 23 ist gemäß der Ausführungsform in Fig. 1a mit dem Zwischenvolumen 13 und gemäß der Ausführungsform in Fig. 1b mit der ersten Verdichtungsstufe 5 über ein drittes Einlassventil 24 verbunden, so dass in der geöffneten Stellung des ersten Schaltventils 22a die gespeicherte Luft L4 in das Zwischenvolumen 13 sowie in den zweiten Ansaugraum 6.1 (Fig. 1a) oder über das dritte Einlassventil 24 in den ersten Ansaugraum 5.1 (Fig. 1b) einströmen kann. Somit kann die verdichtete Luft L4 von der zweiten Verdichtungsstufe 6 oder der ersten und der zweiten Verdichtungsstufe 5, 6 erneut verdichtet werden. Sind mehr als zwei Verdichtungsstufen 5, 6 im Kompressor 4 vorgesehen, kann das Aufladedruckmittel A über die Aufladeleitung 23 auch in eine beliebige andere Verdichtungsstufe eingelassen werden.

Ist im geschlossenen Betriebsmodus BMc eine Rückführung von Kammerluft L5 aus den Druckmittelkammern 3.i in den Druckmittelvorrat 20 gewünscht, so wird das der jeweiligen Druckmittelkammer 3.i zugeordnete Ventil 21.i (mit i=1...4) sowie ein zweites Schaltventil 22b geöffnet und das sechste Ventil 21.6 geschlossen, so dass die Kammerluft L5 als Aufladedruckmittel A in die Aufladeleitung 23 eingelassen wird. Das erste Schaltventil 22a ist in diesem Fall ebenfalls geschlossen und das fünfte Ventil 21.5 geöffnet, um ein Rückführen in den Druckmittelvorrat 20 zu ermöglichen. Ist lediglich eine erneute Verdichtung von gespeicherter Luft L4 in der Druckregelanlage 1 vorgesehen, kann der Pfad über das zweite Schaltventil 22b auch entfallen.

Zum Regeln der Leistungsaufnahme des mehrstufigen Kompressors 4 bei der erneuten Verdichtung des Aufladedruckmittels A im geschlossenen Betriebsmodus BMc ist in der Aufladeleitung 23 eine Drosselanordnung 25 vorgesehen, mit der ein Auflade-Volumenstrom QA des in der Aufladeleitung 23 strömenden Aufladedruckmittels A auf einen Grenz-Volumenstrom QG begrenzt werden kann.

Die Drosselanordnung 25 weist dazu einen pneumatischen Steuereingang 26 auf, über den ein Vordruck pV an die Drosselanordnung 25 übertragen werden kann, wobei gemäß Fig. 1a der Aufladedruck pA des Aufladedruckmittels A und gemäß Fig. 1b der Verdichtungs-Druck p3 der durch den mehrstufigen Kompressor 4 verdichteten Luft L3 als Vordrücke pV an den Steuereingang 26 der Drosselanordnung 25 angelegt werden. Umgekehrt können auch in Fig. 1a der Verdichtungs-Druck p3 und in Fig. 1b der Aufladedruck pA als Vordrücke pV verwendet werden. Es kann auch direkt der in der Drosselanordnung 25 eingehende Eingangs-Druck pE als Vordruck pV verwendet werden, der in etwa dem Aufladedruck pA entspricht.

Statt einer pneumatischen Vorgabe des entsprechenden Vordruckes pV an die Drosselanordnung 25 kann auch eine elektrische Vorgabe über ein elektrisches Vordruck-Signal SV erfolgen, wobei das elektrische Vordruck-Signal SV dann einen dem Vordruck pV entsprechenden Wert an den in dem Fall elektrischen Steuereingang 26 der Drosselanordnung 25 überträgt.

Der Vordruck pV dient hierbei als Maß einer aktuellen (p3 als Vordruck pV) bzw. aktuell zu erwartenden (pA als Vordruck pV) Belastung des mehrstufigen Kompressors 4 als pneumatischer Verbraucher in der Druckregelanlage 1. In Abhängigkeit davon kann in der Drosselanordnung 25 ein Anordnungs-Querschnitt AQ eingestellt werden, um den Auflade-Volumenstrom QA zu begrenzen, wobei der Anordnungs-Querschnitt AQ einen effektiven Leitungsquerschnitt der Drosselanordnung 25 angibt, den das Aufladedruckmittel A beim Durchgang durch die Drosselanordnung 25 durchströmt.

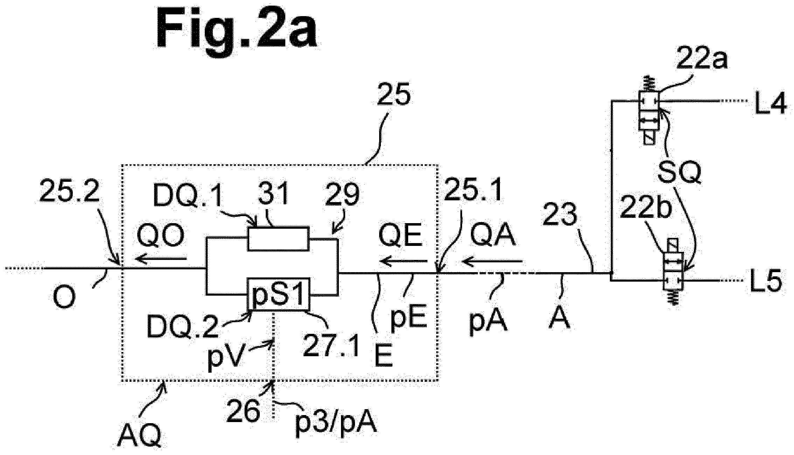

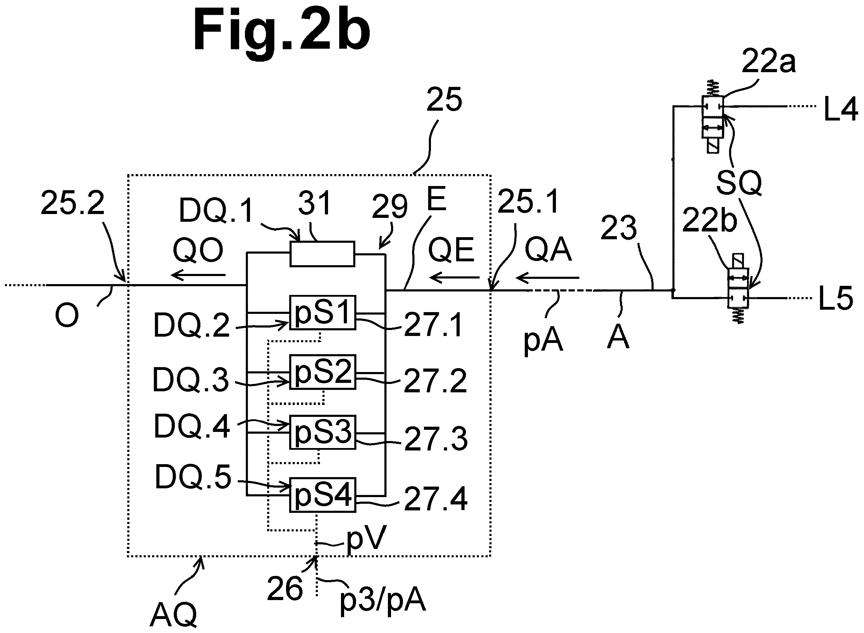

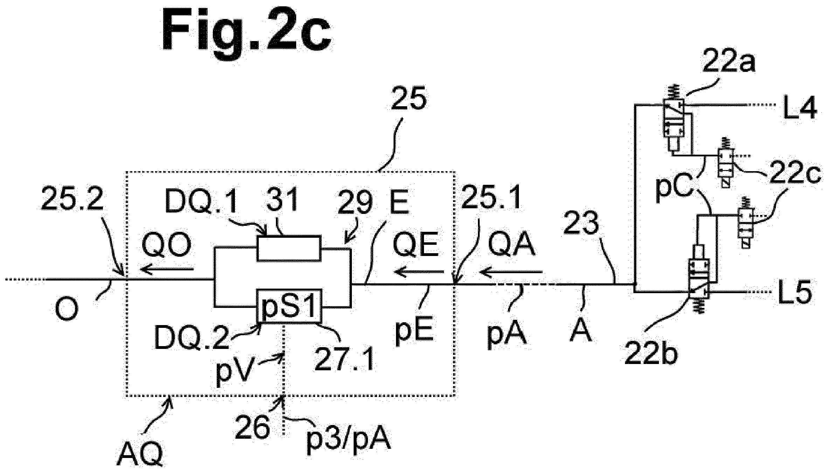

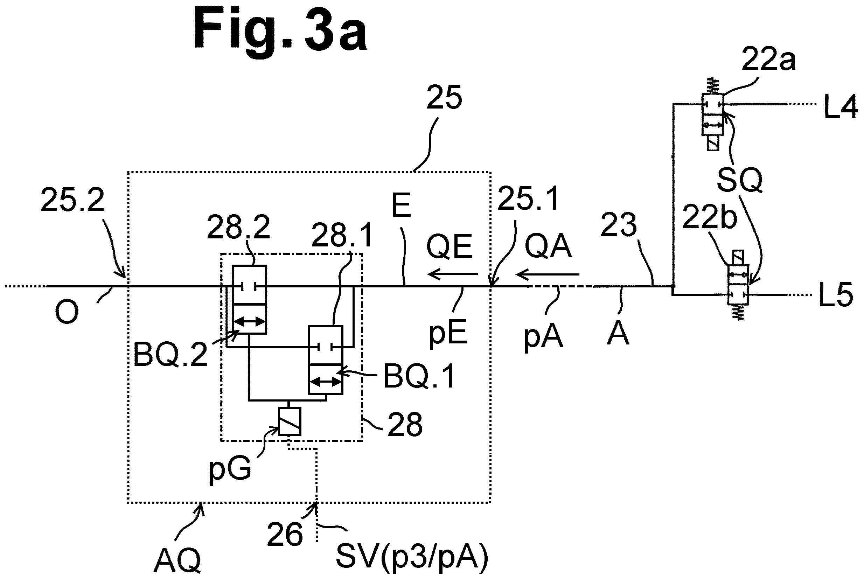

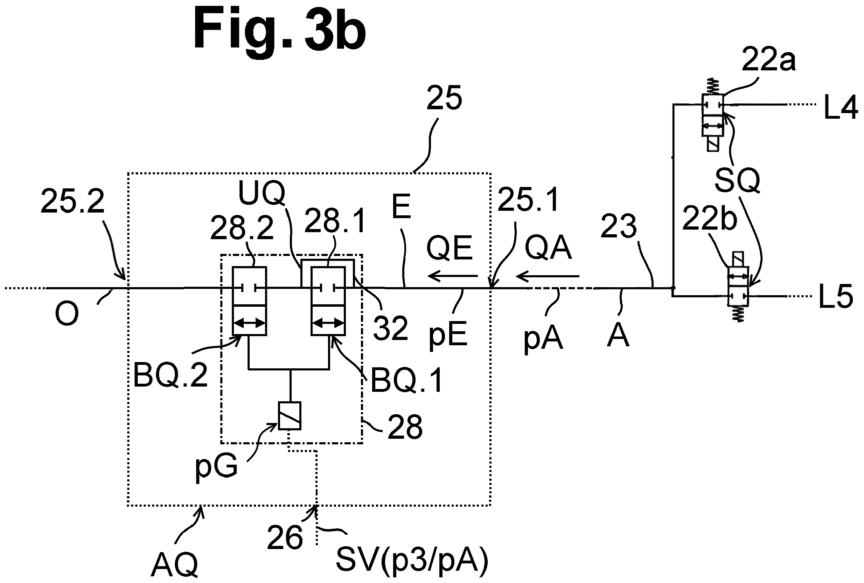

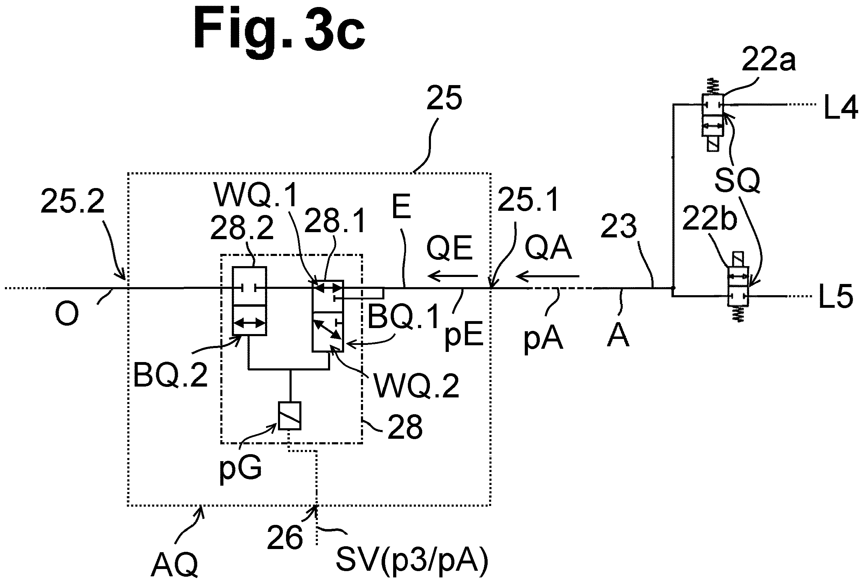

Um dies zu erreichen, kommen gemäß den Figuren 2a, 2b, 2c und 3a, 3b, 3c unterschiedliche konstruktive Ausführungsformen in Frage:
Gemäß einer ersten Ausführungsform ist in den Figuren 2a, 2b und 2c vorgesehen, dass der Drosselanordnung 25 über einen Drosseleingang 25.1 das Aufladedruckmittel A als eingehendes Druckmittel E zugeführt wird. Der Drosseleingang 25.1 ist dazu über die Aufladeleitung 23 mit den beiden Schaltventilen 22a, 22b verbunden, die jeweils einen Schaltventil-Querschnitt SQ von zwischen 0.5mm und 4mm aufweisen, über die bei alternativ geöffneten Schaltventilen 22a, 22b der Auflade-Volumenstrom QA bereits vorab begrenzt wird, da durch die Schaltventile 22a, 22b aufgrund des Schaltventil-Querschnittes SQ nur ein begrenzter Volumenstrom passieren kann. Die Schaltventile 22a, 22b werden in Fig. 2a und 2b elektronisch angesteuert und darüber eines der Schaltventile 22a, 22b geöffnet sobald elektrisch eine Anforderung zum Wechseln in den geschlossenen Betriebsmodus BMc erfolgt, in dem die gespeicherte Luft L4 oder die Kammerluft L5 als Aufladedruckmittel A freigegeben wird.

Ein am Drosseleingang 25.1 vorherrschender Eingangs-Volumenstrom QE sowie ein Eingangs-Druck pE werden somit durch den Auflade-Volumenstrom QA bzw. den Aufladedruck pA festgelegt.

In der Drosselanordnung 25 ist eine Parallelschaltung 29 von Drosselventilen 31, 27.1 vorgesehen, wobei ein nicht-steuerbares Drosselventil 31 und ein steuerbares Drosselventil 27.1 vorgesehen sind. Das steuerbare Drosselventil 27.1 wird über den am pneumatischen Steuereingang 26 eingeleiteten Vordruck pV angesteuert, der entweder dem Verdichtungs-Druck p3 (Fig. 1b) oder dem Aufladedruck pA (Fig. 1a) entspricht. Dem steuerbaren Drosselventil 27.1 ist ein Schließdruck pS1 zugeordnet, wobei das steuerbare Drosselventil 27.1 bei einem Überschreiten des Schließdrucks pS1 durch den Vordruck pV geschlossen wird.

Das nicht-steuerbare Drosselventil 31 weist einen ersten Drosselventil-Querschnitt DQ.1 und das steuerbare Drosselventil 27.1 einen zweiten Drosselventil-Querschnitt DQ.2 auf. Der Anordnungs-Querschnitt AQ ist - falls sich beide Drossel-Ventile 31, 27.1 in der geöffneten Stellung befinden - die Summe der beiden Drosselventil-Querschnitte DQ.1, DQ.2 und bestimmt, welcher Leitungsquerschnitt auf das eingehende Druckmittel E, d.h. das Aufladedruckmittel A, in der Drosselanordnung 25 wirkt und somit ob und wie stark der Eingangs-Volumenstrom QE beim Druckströmen der Drosselanordnung 25 reduziert wird.

Die Drosselventil-Querschnitte DQ.j sind hierbei so gewählt, dass der Anordnungs-Querschnitt AQ bei geöffneten Drosselventilen 31, 27.1 in etwa dem Schaltventil-Querschnitt SQ entspricht, so dass in der geöffneten Stellung des nicht-steuerbaren und des steuerbaren Drosselventils 31, 27.1 der Eingangs-Volumenstrom QE beim Durchströmen der Drosselanordnung 25 lediglich durch Verluste reduziert wird. Vordruckabhängig kann nun das steuerbare Drosselventil 27.1 geschlossen werden, um den Anordnungs-Querschnitt AQ zu verringern. Das eingehende Aufladedruckmittel A hat dann nur noch die Möglichkeit, durch das nicht-steuerbare Drosselventil 31 zu strömen. Der Strömungswiderstand für das Aufladedruckmittel A steigt, wodurch der Auflade-Volumenstrom QA bzw. Eingangs-Volumenstrom QE verringert werden.

Das steuerbare Drosselventil 27.1 wird insbesondere dann geschlossen, wenn der Schließdruck pS1 überschritten wurde, d.h. wenn die durch den Vordruck pV charakterisierte Belastung des mehrstufigen Kompressors 4 als pneumatischer Verbraucher einen definierten Maximalwert überschreitet, so dass eine Überlastung dieses Verbrauchers entstehen würde. In dem Fall wird durch Verringerung des Anordnungs-Querschnittes AQ der Strömungswiderstand für das Aufladedruckmittel A erhöht und der Eingangs-Volumenstrom QE auf einen Ausgangs-Volumenstrom QO reduziert, der kleiner gleich einem Grenz-Volumenstrom QG ist. Dies geschieht über den Vordruck pV, der ein Maß der aktuellen bzw. aktuell zu erwartenden Belastung des mehrstufigen Kompressors 4 als pneumatischer Verbraucher in der Druckregelanlage 1 ist, und in Abhängigkeit dessen in diesem Beispiel das steuerbare Drosselventil 27.1 geöffnet oder geschlossen wird.

An einem Drosselausgang 25.2 der Drosselanordnung 25 liegt somit ein volumenstrombegrenztes Ausgangs-Druckmittel O mit einem Ausgangs-Volumenstrom QO an, das dem mehrstufigen Kompressor 4 entweder in der ersten Verdichtungsstufe 5 (Fig. 1b) oder über das Zwischenvolumen 13 der zweiten Verdichtungsstufe 6 (Fig. 1a) zur erneuten Verdichtung zugeführt wird. Da der Ausgangs-Volumenstrom QO kleiner oder gleich dem Grenz-Volumenstrom QG ist, arbeitet der mehrstufige Kompressor 4 damit unterhalb seiner Leistungsgrenze, d.h. er wird nicht überlastet.

Im geschlossenen Betriebsmodus BMc befindet sich gemäß der Ausführung in Fig. 1a im Zwischenvolumen 13 des mehrstufigen Kompressors 4 ein Mixdruckmittel L6, das eine Mischung aus dem volumenstrombegrenzten Ausgangs-Druckmittel O und dem vorverdichteten Druckmittel L2 enthält. Dieses Mixdruckmittel L6 wird mit einem Mixdruck p6 sowie einem Mix-Volumenstrom QM in die zweite Verdichtungsstufe 6 zur erneuten Verdichtung gefördert. In der Ausführung in Fig. 1b hingegen befindet sich im Zwischenvolumen lediglich das vorverdichtete Druckmittel L2, das bereits im ersten Ansaugraum 5.1 mit der Ansaugluft L1 vermischt wird.

Gemäß der Erweiterung in Fig. 2b sind weitere schaltbare Drosselventile 27.i in der Parallelschaltung 29 angeordnet. Jedem der schaltbaren Drosselventile 27.i ist jeweils ein unterschiedlicher Schließdruck pSi, i=1, ...,4 derartig zugeordnet, dass die schaltbaren Drosselventile 27.i bei steigendem Vordruck pV sukzessive geschlossen werden. So sind bei einem niedrigen Vordruck pV noch alle schaltbaren Drosselventile 27.i geöffnet und der Anordnungs-Querschnitt AQ entspricht in etwa dem Schaltventil-Querschnitt SQ. Die Drosselventil-Querschnitte DQ.j sind hierbei ebenfalls in der Summe gleich dem Schaltventil-Querschnitt SQ, so dass durch das sukzessive Schließen einzelner Drosselventile 27.i der Eingangs-Volumenstrom QE verringert werden kann. Dadurch kann eine verbesserte Stufbarkeit gewährleistet werden, da die Reduzierung des Eingangs-Volumenstroms QE durch ein mehrstufiges Regeln des Anordnungs-Querschnittes AQ feinstufiger eingestellt werden kann. Dadurch kann der mehrstufige Kompressor 4 ohne Überlastung effizienter ausgenutzt werden, indem dieser knapp unterhalb der Leistungsgrenze betrieben wird.

Gemäß Fig. 2c ist ergänzend vorgesehen, die Schaltventile 22a, 22b pneumatisch zu schalten, wobei die Schaltventile 22a, 22b dann beispielsweise als 3/2-Wegeventile ausgeführt sind. Dazu ist jedem Schaltventil 22a, 22b ein elektrisch steuerbares Steuerventil 22c zugeordnet, das bei einer elektrischen Anforderung zur Freigabe des Aufladedruckmittels A, d.h. der verdichteten Luft L4 oder der Kammerluft L5, einen Steuerdruck pC an das jeweilige Schaltventil 22a, 22b anlegt, so dass dieses in die geöffnete Stellung übergeht und dadurch alternativ das entsprechende Aufladedruckmittel A, L4, L5 freigibt. Dadurch können kostengünstigere pneumatische Schaltventile 22a, 22b mit einem höheren Schaltventil-Querschnitt SQ gewählt werden und das elektrische Steuerventil 22c mit einem niedrigeren Querschnitt ausgeführt werden, wodurch vorteilhafterweise Kosten gespart werden können.

Gemäß den Figuren 3a, 3b, 3c ist eine zweite, nicht erfindungsgemäße Ausführungsform der Drosselanordnung 25 dargestellt, bei der lediglich ein Drosselventil 28 vorgesehen ist, das als Doppelanker-Ventil ausgeführt ist. Das Doppelanker-Ventil 28 weist einen ersten Anker 28.1 und einen zweiten Anker 28.2 auf, die jeweils über ein von einer Software-Logik elektrisch vorgegebenes Vordruck-Signal SV in Abhängigkeit des Verdichtungs-Druckes p3 (Fig. 1b) oder des Aufladedruckes pA (Fig. 1a) in eine geöffnete oder eine in den Figuren 3a, 3b dargestellte geschlossene Schaltstellung überführt werden können. Dem ersten Anker 28.1 ist in der geöffneten Stellung ein erster Anker-Querschnitt BQ.1 und dem zweiten Anker 28.2 in der geöffneten Stellung ein zweiter Anker-Querschnitt BQ2 zugeordnet, die identisch aber auch unterschiedlich sein können, beispielsweise zwischen 1mm und 4mm.

Die Anker 28.1, 28.2 des Doppelanker-Ventils 28 in der Drosselanordnung 25 werden in Abhängigkeit des Vordruckes pV über das Vordruck-Signal SV geöffnet oder geschlossen, d.h. ein Durchströmen des jeweiligen Ankers 28.1, 28.2 mit dem eingehenden Druckmittel E wird erlaubt bzw. verhindert, wobei bei einem niedrigen Vordruck pV, der einen vorab festgelegten Grenzdruck pG unterschreitet, vorzugsweise beide Anker 28.1, 28.2 parallel zueinander geschaltet werden, d.h. in dem in Fig. 3a gezeigten Zustand werden beide Anker 28.1, 28.2 umgeschaltet, so dass das eingehende Druckmittel E beide Anker 28.1, 28.2 durchströmen kann. Bei hohen Vordrücken pV, die den vorab festgelegten Grenzdruck pG übersteigen, wird lediglich ein Anker 28.1, 28.2 geöffnet und der andere Anker 28.2, 28.1 wird geschlossen. Somit wird bei hohen Vordrücken pV eine stärkere Reduzierung des Eingangs-Volumenstromes QE stattfinden. In Abhängigkeit des Vordruck-Signals SV kann auch eine vollständige Abschaltung des Drosselventils 28, d.h. eine Reduzierung des Eingangs-Volumenstromes QE auf null, erfolgen, indem beide Anker 28.1, 28.2 - wie in Fig. 3a gezeigt - geschlossen werden, so dass kein Aufladedruckmittel A zum mehrstufigen Kompressor 4 strömen kann.

Gemäß der in Fig. 3b gezeigten und nicht erfindungsgemäßen Variante ist vorgesehen, beide Anker 28.1, 28.2 in Reihe zu schalten. Um in dem Fall eine Variation des Anordungs-Querschnittes AQ zu ermöglichen, wird der erste Anker 28.1 durch eine Umgehungsleitung 32 überbrückt, wobei die Umgehungsleitung 32 einen Umgehungs-Querschnitt UQ aufweist. Der erste Anker-Querschnitt BQ.1 ist in dem Fall gleich dem zweiten Anker-Querschnitt BQ.2 und der Umgehungs-Querschnitt UQ ist geringer als der erste und der zweite Anker-Querschnitt BQ.1, BQ.2.

Ist der erste Anker 28.1 geschlossen und der zweite Anker 28.2 geöffnet, so strömt das eingehende Druckmittel E durch die Umgehungsleitung 32 in den zweiten Anker 28.2. Da die Umgehungsleitung 32 mit dem zweiten Anker 28.2 in Reihe geschaltet ist, entspricht der Anordnungs-Querschnitt AQ in dem Fall dem kleineren Umgehungs-Querschnitt UQ und es wird ein entsprechend volumenstromangepasstes ausgehendes Druckmittel O bereitgestellt. Wird stattdessen der erste und der zweite Anker 28.1, 28.2 geöffnet, strömt das eingehende Druckmittel E sowohl durch den ersten Anker 28.1 als auch durch die Umgehungsleitung 32, die parallel zueinander geschaltet sind, und anschließend in den zweiten Anker 28.2. Der durch die Umgehungsleitung 32 und den ersten Anker 28.1 summierte Querschnitt BQ.1 + UQ ist größer als der damit in Reihe wirkende zweite Anker-Querschnitt BQ.2, so dass der Anordnungs-Querschnitt AQ dem zweiten Anker-Querschnitt BQ.2 entspricht. Somit kann auch hier zwischen verschiedenen Anordnungs-Querschnitten AQ hin- und hergeschaltet werden.

Alternativ kann statt der Umgehungsleitung 32 gemäß der nicht erfindungsgemäßen Fig. 3c ein als 3/2-Wegeventil ausgeführter erster Anker 28.1 verwendet werden. Dieser weist in einer ersten Schaltstellung einen ersten Wege-Querschnitt WQ.1 und in einer zweiten Schaltstellung einen zweiten Wege-Querschnitt WQ.2 auf, wobei der erste Wege-Querschnitt WQ.1 geringer als der zweite Wege-Querschnitt WQ.2 ist und der zweite Wege-Querschnitt WQ.2 dem zweiten Anker-Querschnitt BQ.2 entspricht. Der erste Anker-Querschnitt BQ.1 wird somit durch die Schaltstellung des ersten Ankers 28.1 bestimmt. In der ersten Schaltstellung des ersten Ankers 28.1 ist der erste Anker-Querschnitt BQ.1 geringer als der zweite Anker-Querschnitt BQ.2, so dass der Anordnungs-Querschnitt AQ gleich dem ersten Anker-Querschnitt BQ.1 ist. Andernfalls, d.h. in der zweiten Schaltstellung, ist der Anordnungs-Querschnitt AQ gleich dem zweiten Wege-Querschnitt WQ.2 bzw. dem zweiten Anker-Querschnitt BQ.2. Somit kann auch hier zwischen verschiedenen Anordnungs-Querschnitten AQ hin- und hergeschaltet werden.

Somit kann durch die unterschiedlichen Ausführungsformen eine vordruckabhängige Volumenstrombegrenzung auf den Grenz-Volumenstrom QG in mindestens zwei Stufen erreicht werden, um eine Überlastung des mehrstufigen Kompressors 4 zu vermeiden. Dadurch kann im geschlossenen Betriebsmodus BMc eine Leistungsbegrenzung erreicht werden, mit der der Energiebedarf des Kompressors 4 variabel angepasst werden kann. Die benötigte Leistungsaufnahme des Motors 7 des Kompressors 4 wird somit begrenzt, da eine begrenzte Verdichtungsarbeit zu verrichten ist. Dies kann zur Optimierung des mehrstufigen Kompressors verwendet werden, so dass eine optimale Abstimmung insbesondere des Verdichtungs-Volumenstroms QV aus der zweiten Verdichtungsstufe 6 erfolgen kann.

### Bezugszeichenliste (Teil der Beschreibung)

- 1: Luftfederanlage
- 3.i: Druckmittelkammern
- 4: zweistufiger Kompressor
- 5: erste Verdichtungsstufe
- 5.1: erster Ansaugraum
- 5.2: erster Verdichtungsraum
- 6: zweite Verdichtungsstufe
- 6.1: zweiter Ansaugraum
- 6.2: zweiter Verdichtungsraum
- 7: Motor
- 10: Ansaugleitung
- 11: erstes Einlassventil
- 12: erstes Auslassventil
- 13: Zwischenvolumen
- 14: zweites Einlassventil
- 15: zweites Auslassventil
- 16: Auslassleitung
- 17: Lufttrockner
- 18: Düse
- 19: Vorratsleitung
- 20: Druckmittelvorrat
- 21.i: steuerbare Ventile
- 22a: erstes Schaltventil
- 22b: zweites Schaltventil
- 22c: Steuerventil
- 23: Aufladeleitung
- 24: drittes Einlassventil
- 25: Drosselanordnung
- 25.1: Drosseleingang
- 25.2: Drosselausgang
- 26: Steuereingang
- 27.i: Drosselventil (steuerbar)
- 28: Drosselventil (Doppelanker)
- 28.1: erster Anker
- 28.2: zweiter Anker
- 29: Parallelschaltung
- 30: Druckmessgerät
- 31: Drosselventil (nicht-steuerbar)
- 32: Umgehungsleitung
- 33: Ablassventil
- 100: Atmosphäre
- 200: Fahrzeug

- A: Aufladedruckmittel
- AQ: Anordnungs-Querschnitt
- BMo: offener Betriebsmodus
- BMc: geschlossener Betriebsmodus
- BQ.1, BQ.2: Anker-Querschnitt
- DQ.j: Drosselventil-Querschnitt
- E: eingehendes Druckmittel
- L1: Ansaugluft
- L2: vorverdichtete Luft
- L3: verdichtete Luft
- L4: gespeicherte Luft
- L5: Kammerluft
- L6: Mixluft
- O: Ausgangs-Druckmittel (volumenstrombegrenzt)
- p1: Luftdruck/Ansaugdruck
- p2: Zwischendruck
- p3: Verdichtungs-Druck
- p4: Vorratsdruck
- pA: Auflade-Druck
- pE: Eingangs-Druck
- pG: Grenz-Druck
- pSi: Schließdruck
- pC: Steuerdruck
- QA: Auflade-Volumenstrom
- QE: Eingangs-Volumenstrom
- QG: Grenz-Volumenstrom
- QO: Ausgangs-Volumenstrom
- QV: Verdichtungs-Volumenstrom
- SQ: Schaltventil-Querschnitt
- SV: Vordruck-Signal
- UQ: Umgehungs-Querschnitt
- WQ. 1, WQ.2: Wege-Querschnitt

## Patentansprüche

1. Druckregelanlage (1) für ein Fahrzeug (200), wobei die Druckregelanlage (1) eine Drosselanordnung (25) und einen pneumatischen Verbraucher (4) aufweist, wobei die Druckregelanlage (1) als pneumatischen Verbraucher einen mehrstufigen Kompressor (4) mit einer ersten Verdichtungsstufe (5) zum Bereitstellen eines vorverdichten Druckmittels (L2) und einer mindestens zweiten Verdichtungsstufe (6) zum Bereitstellen eines verdichteten Druckmittels (L3) aufweist,
wobei mindestens eine mit der ersten oder der mindestens zweiten Verdichtungsstufe (5, 6) verbundene Druckmittelkammer (3.i; i=1...4) sowie ein mit der ersten oder der zweiten Verdichtungsstufe (5, 6) verbundener Druckmittelvorrat (20) zum Speichern des verdichteten Druckmittels (L3) vorgesehen ist, und
eine Aufladeleitung (23) vorgesehen ist, die den Druckmittelvorrat (20) und/oder die mindestens eine Druckmittelkammer (3.i) mit der ersten oder der zweiten Verdichtungsstufe (5, 6) verbindet, zum Fördern eines in dem Druckmittelvorrat (20) gespeicherten Druckmittels (L4) oder eines in den Druckmittelkammern (3.i) genutzten Kammerdruckmittels (L5) als Aufladedruckmittel (A) in die erste oder die mindestens zweite Verdichtungsstufe (5, 6) des mehrstufigen Kompressors (4),
wobei die Drosselanordnung (25) in der Aufladeleitung (23) angeordnet ist zum Begrenzen eines Auflade-Volumenstromes (QA) des Aufladedruckmittels (A) auf den Grenz-Volumenstrom (QG), **dadurch gekennzeichnet, dass**
die Drosselanordnung (25) mit mindestens einem Drosselventil (31, 27.i) ausgebildet ist, wobei das mindestens eine Drosselventil (31, 27.i) einen Anordnungs-Querschnitt (AQ) der Drosselanordnung (25) vorgibt, wobei der Anordnungs-Querschnitt (AQ) angibt, welcher Strömungswiderstand auf ein in die Drosselanordnung (25) eingehendes Druckmittel (E) wirkt, und
das mindestens ein Drosselventil (27.i) in Abhängigkeit eines Vordruckes (pV) steuerbar ist, wobei durch die Ansteuerung des mindestens einen steuerbaren Drosselventils (27.i) der Anordnungs-Querschnitt (AQ) der Drosselanordnung (25) derartig einstellbar ist, dass ein Eingangs-Volumenstrom (QE) des in die Drosselanordnung (25) eingehenden Druckmittels (E) vordruckabhängig (pV) auf einen Grenz-Volumenstrom (QG) begrenzt werden kann, zum vordruckabhängigen (pV) Einstellen einer Leistungsaufnahme des an die Drosselanordnung (25) angeschlossenen pneumatischen Verbrauchers (4) in der Druckregelanlage (1), wobei die Drosselanordnung (25) eine Parallelschaltung (29) von mindestens zwei Drosselventilen (31, 27.i), denen jeweils ein Drosselventil-Querschnitt (DQ.j) zugeordnet ist, aufweist, wobei mindestens eines der mindestens zwei Drosselventile (31, 27.i) in der Parallelschaltung (29) in Abhängigkeit des Vordruckes (pV) pneumatisch oder elektrisch gesteuert in eine geschlossene Stellung umschaltbar ist, zum vordruckabhängigen (pV) Einstellen des Anordnungs-Querschnittes (AQ),
wobei sich der Anordnungs-Querschnitt (AQ) durch eine Summe derjenigen Drosselventil-Querschnitte (DQ.j) ergibt, denen ein geöffnetes Drosselventil (31, 27.i) der Parallelschaltung (29) zugeordnet ist..

2. Druckregelanlage (1) für ein Fahrzeug (200) nach Anspruch 1, **dadurch gekennzeichnet, dass** dem mindestens einen steuerbaren Drosselventil (27.i) in der Parallelschaltung (29) ein Schließdruck (pSi) zugeordnet ist und das mindestens eine steuerbare Drosselventil (27.i) in eine geschlossene Stellung umschaltbar ist, falls der Vordruck (pV) größer ist als der Schließdruck (pSi), zum Verringern des Anordnungs-Querschnitts (AQ) bei steigendem Vordruck (pV).

3. Druckregelanlage (1) für ein Fahrzeug (200) nach Anspruch 2, **dadurch gekennzeichnet, dass** mehrere steuerbare Drosselventile (27.i) in der Parallelschaltung (29) vorgesehen sind und jedem steuerbaren Drosselventil (27.i) ein anderer Schließdruck (pSi) derartig zugeordnet ist, dass die steuerbaren Drosselventile (27.i) bei steigendem Vordruck (pV) sukzessive in die geschlossenen Stellung umschaltbar sind, zum stufenweisen Verringern des Anordnungs-Querschnitts (AQ) bei steigendem Vordruck (pV).

4. Druckregelanlage (1) für ein Fahrzeug (200) nach einem der vorhergehenden Ansprüche, **dadurch gekennzeichnet, dass** der Grenz-Volumenstrom (QG) in Abhängigkeit einer Leistungsgrenze des pneumatischen Verbrauchers (4) festlegbar ist, zum Verhindern einer Überlastung des pneumatischen Verbrauchers (4).

5. Druckregelanlage (1) für ein Fahrzeug (200) nach einem der vorhergehenden Ansprüche, **dadurch gekennzeichnet, dass** die Drosselventile (27.i) derartig in Abhängigkeit des Vordruckes (pV) ansteuerbar sind, dass sich bei steigendem Vordruck (pV) der Anordnungs-Querschnitt (AQ) verringert.

6. Druckregelanlage (1) für ein Fahrzeug (200) nach einem der vorhergehenden Ansprüche, **dadurch gekennzeichnet, dass** der Drosselanordnung (25) über einen Steuereingang (26) pneumatisch oder elektrisch ein Vordruck (pV) vorgebbar ist, der eine Belastung des pneumatischen Verbrauchers (4) charakterisiert, wobei dazu als Vordruck (pV) beispielsweise ein Eingangs-Druck (pE) des in die Drosselanordnung (25) eingehenden Druckmittels (E) oder ein aus dem pneumatischen Verbraucher (4) ausgehender Verdichtungs-Druck (p3) vom Steuereingang (26) aufnehmbar ist.

7. Druckregelanlage (1) für ein Fahrzeug (200) nach einem der vorhergehenden Ansprüche, **dadurch gekennzeichnet, dass** die Drosselanordnung (25) in einer zu dem pneumatischen Verbraucher (4) führenden Druckmittelleitung (23) anordenbar ist zum Ausgeben eines volumenstrombegrenzten (QG) Ausgangs-Druckmittels (O) an den pneumatischen Verbraucher (4).

8. Druckregelanlage (1) nach Anspruch 7, **dadurch gekennzeichnet, dass** in der Aufladeleitung (23) in Strömungsrichtung des Aufladedruckmittels (A) vor der Drosselanordnung (25) ein pneumatisch oder elektrisch gesteuertes Schaltventil (22a, 22b) angeordnet ist zum Freigeben des Aufladedruckmittels (A), wobei das Schaltventil (22a, 22b) einen Schaltventil-Querschnitt (SQ) aufweist, die dem Anordnungs-Querschnitt (AQ) entspricht, wenn sich alle Drosselventile (31, 27.1) in der geöffneten Stellung befinden.

9. Fahrzeug (200), insbesondere Personenkraftwagen (200), mit einer Druckregelanlage (1), nach einem der Ansprüche 1 bis 8.

## Claims

1. Pressure control system (1) for a vehicle (200), the pressure control system (1) comprising a throttle arrangement (25) and a pneumatic load (4), the pressure control system (1) comprising as a pneumatic load a multi-stage compressor (4) having a first compression stage (5) for providing a precompressed pressure medium (L2) and an at least second compression stage (6) for providing a compressed pressure medium (L3),
at least one pressure medium chamber (3.i; i=1...4) connected to the first or the at least second compression stage (5, 6) and a pressure medium supply (20) connected to the first or the second compression stage (5, 6) being provided for storing the compressed pressure medium (L3), and
a charging line (23) being provided which connects the pressure medium supply (20) and/or the at least one pressure medium chamber (3.i) to the first or the second compression stage (5, 6), for conveying a pressure medium (L4) stored in the pressure medium supply (20) or a chamber pressure medium (L5) used in the pressure medium chambers (3.i) as charging pressure medium (A) into the first or the at least second compression stage (5, 6) of the multi-stage compressor (4),
the throttle arrangement (25) being arranged in the charging line (23) in order to limit a charging volumetric flow (QA) of the charging pressure medium (A) to the limit volumetric flow (QG), **characterized in that**
the throttle arrangement (25) has at least one throttle valve (31, 27.i), the at least one throttle valve (31, 27.i) specifying an arrangement cross section (AQ) of the throttle arrangement (25), the arrangement cross section (AQ) indicating which flow resistance acts on a pressure medium (E) entering the throttle arrangement (25), and
it being possible to control the at least one throttle valve (27.i) on the basis of an inlet pressure (pV), it being possible, by controlling the at least one controllable throttle valve (27.i), to adjust the arrangement cross section (AQ) of the throttle arrangement (25) in such a way that an input volumetric flow (QE) of the pressure medium (E) entering the throttle arrangement (25) can be limited in an inlet-pressure dependent (pV) manner to a limit volumetric flow (QG) in order to adjust, in an inlet-pressure dependent (pV) manner, a power consumption of the pneumatic load (4) attached to the throttle arrangement (25) in the pressure control system (1), the throttle arrangement (25) having a parallel circuit (29) of at least two throttle valves (31, 27.i), each of which is assigned a throttle valve cross section (DQ.j), it being possible to switch at least one of the at least two throttle valves (31, 27.i) in the parallel circuit (29) on the basis of the input pressure (pV) in a pneumatically or electrically controlled manner to a closed position, in order to adjust the arrangement cross section (AQ) in an input-pressure dependent (pV) manner,
the arrangement cross section (AQ) resulting from a sum of those throttle valve cross sections (DQ.j) to which an opened throttle valve (31, 27.i) of the parallel circuit (29) is assigned.

2. Pressure control system (1) for a vehicle (200) according to claim 1, **characterized in that** a closing pressure (pSi) is assigned to the at least one controllable throttle valve (27.i) in the parallel circuit (29) and the at least one controllable throttle valve (27.i) can be switched into a closed position if the inlet pressure (pV) is greater than the closing pressure (pSi), in order to reduce the arrangement cross section (AQ) when the inlet pressure (pV) increases.

3. Pressure control system (1) for a vehicle (200) according to claim 2, **characterized in that** a plurality of controllable throttle valves (27.i) are provided in the parallel circuit (29) and a different closing pressure (pSi) is assigned to each controllable throttle valve (27.i) in such a way that the controllable throttle valves (27.i) can be switched successively into the closed position when the inlet pressure (pV) increases, in order to incrementally reduce the arrangement cross section (AQ) when the inlet pressure (pV) increases.

4. Pressure control system (1) for a vehicle (200) according to any of the preceding claims, **characterized in that** the limit volumetric flow (QG) can be fixed on the basis of a power limit of the pneumatic load (4), in order to prevent overloading of the pneumatic load (4).

5. Pressure control system (1) for a vehicle (200) according to any of the preceding claims, **characterized in that** the throttle valves (27.i) can be controlled in such a way, on the basis of the inlet pressure (pV), that the arrangement cross section (AQ) decreases when the inlet pressure (pV) increases.

6. Pressure control system (1) for a vehicle (200) according to any of the preceding claims, **characterized in that** an inlet pressure (pV) can be pneumatically or electrically specified by the throttle arrangement (25) via a control input (26), which inlet pressure characterizes loading of the pneumatic load (4), it being possible for this purpose for an input pressure (pE) of the pressure medium (E) entering the throttle arrangement (25) or a compression pressure (p3) originating from the pneumatic load (4) from the control input (26) to be consumed as an inlet pressure (pV).

7. Pressure control system (1) for a vehicle (200) according to any of the preceding claims, **characterized in that** the throttle arrangement (25) can be arranged in a pressure medium line (23) leading to the pneumatic load (4) in order to output a volumetric-flow limited (QG) output pressure medium (O) to the pneumatic load (4).

8. Pressure control system (1) according to claim 7, **characterized in that** a pneumatically or electrically controlled switching valve (22a, 22b) is arranged in the charging line (23) in the flow direction of the charging pressure medium (A) upstream of the throttle arrangement (25) in order to release the charging pressure medium (A), the switching valve (22a, 22b) having a switching-valve cross section (SQ) which corresponds to the arrangement cross section (AQ) when all the throttle valves (31, 27.1) are in the open position.

9. Vehicle (200), in particular a passenger vehicle (200), comprising a pressure control system (1) according to any of claims 1 to 8.

## Revendications

1. Installation de régulation de pression (1) pour un véhicule (200), l'installation de régulation de pression (1) présentant un agencement d'étranglement (25) et un consommateur pneumatique (4), l'installation de régulation de pression (1) présentant, en tant que consommateur pneumatique, un compresseur multi-étage (4) comportant un premier étage de compression (5) pour la fourniture d'un moyen de pression précomprimé (L2) et un au moins second étage de compression (6) pour la fourniture d'un moyen de pression comprimé (L3),
au moins une chambre de moyen de pression (3.i ; i=1...4) reliée au premier ou à l'au moins second étage de compression (5, 6) ainsi qu'une réserve de moyen de pression (20) reliée au premier ou au second étage de compression (5, 6) pour le stockage du moyen de pression comprimé (L3) étant prévue, et
une conduite de suralimentation (23) étant prévue, laquelle relie la réserve de moyen de pression (20) et/ou l'au moins une chambre de moyen de pression (3.i) au premier ou au second étage de compression (5, 6), pour le transport d'un moyen de pression (L4) stocké dans la réserve de moyen de pression (20) ou d'un moyen de pression de chambre (L5) utilisé dans les chambres de moyen de pression (3.i) comme moyen de pression de suralimentation (A) dans le premier ou l'au moins second étage de compression (5, 6) du compresseur multi-étage (4),
l'agencement d'étranglement (25) étant disposé dans la conduite de suralimentation (23) pour la limitation d'un flux volumique de suralimentation (QA) du moyen de pression de suralimentation (A) au flux volumique limite (QG), **caractérisée en ce que**
l'agencement d'étranglement (25) est réalisé en comportant au moins une soupape d'étranglement (31, 27.i), l'au moins une soupape d'étranglement (31, 27.i) prédéfinissant une section transversale d'agencement (AQ) de l'agencement d'étranglement (25), la section transversale d'agencement (AQ) indiquant quelle résistance à l'écoulement agit sur un moyen de pression (E) pénétrant dans l'agencement d'étranglement (25), et
l'au moins une soupape d'étranglement (27.i) pouvant être commandée en fonction d'une pression initiale (pV), la section transversale d'agencement (AQ) de l'agencement d'étranglement (25) pouvant être réglée par la commande de l'au moins une soupape d'étranglement (27.i) pouvant être commandée de telle façon qu'un flux volumique d'entrée (QE) du moyen de pression (E) pénétrant dans l'agencement d'étranglement (25) peut être limité à un flux volumique limite (QG) en fonction de la pression initiale (pV), pour le réglage dépendant de la pression initiale (pV) d'une puissance absorbée du consommateur pneumatique (4) raccordé à l'agencement d'étranglement (25) dans l'installation de régulation de pression (1), l'agencement d'étranglement (25) présentant un montage en parallèle (29) d'au moins deux soupapes d'étranglement (31, 27.i), auxquelles est associée respectivement une section transversale de soupape d'étranglement (DQ.j), au moins l'une des au moins deux soupapes d'étranglement (31, 27.i) dans le montage en parallèle (29) pouvant être commutée dans une position fermée en fonction de la pression initiale (pV) par commande pneumatique ou électrique, pour le réglage dépendant de la pression initiale (pV) de la section transversale d'agencement (AQ),
la section transversale d'agencement (AQ) résultant d'une somme des sections transversales de soupapes d'étranglement (DQ.j) auxquelles est associée une soupape d'étranglement (31, 27.i) ouverte du montage en parallèle (29)..

2. Installation de régulation de pression (1) pour un véhicule (200) selon la revendication 1, **caractérisée en ce qu**'une pression de fermeture (pSi) est associée à l'au moins une soupape d'étranglement (27.i) pouvant être commandée dans le montage en parallèle (29) et l'au moins une soupape d'étranglement (27.i) pouvant être commandée peut être commutée dans une position fermée si la pression initiale (pV) est supérieure à la pression de fermeture (pSi), pour la réduction de la section transversale d'agencement (AQ) en cas de pression initiale (pV) croissante.

3. Installation de régulation de pression (1) pour un véhicule (200) selon la revendication 2, **caractérisée en ce que** plusieurs soupapes d'étranglement (27.i) pouvant être commandées sont prévues dans le montage en parallèle (29) et une pression de fermeture (pSi) différente est associée à chaque soupape d'étranglement (27.i) pouvant être commandée de telle façon que les soupapes d'étranglement (27.i) pouvant être commandées peuvent être commutées successivement dans la position fermée en cas de pression initiale (pV) croissante, pour une réduction graduelle de la section transversale d'agencement (AQ) en cas de pression initiale (pV) croissante.

4. Installation de régulation de pression (1) pour un véhicule (200) selon l'une des revendications précédentes, **caractérisée en ce que** le flux volumique limite (QG) peut être fixé en fonction d'une limite de puissance du consommateur pneumatique (4) afin d'éviter une surcharge du consommateur pneumatique (4).

5. Installation de régulation de pression (1) pour un véhicule (200) selon l'une des revendications précédentes, **caractérisée en ce que** les soupapes d'étranglement (27.i) peuvent être commandées en fonction de la pression initiale (pV) de telle façon que la section transversale d'agencement (AQ) est réduite en cas de pression initiale (pV) croissante.

6. Installation de régulation de pression (1) pour un véhicule (200) selon l'une des revendications précédentes, **caractérisée en ce qu**'une pression initiale (pV) peut être prédéfinie pour l'agencement d'étranglement (25) de manière pneumatique ou électrique par l'intermédiaire d'une entrée de commande (26), laquelle pression initiale caractérise une charge du consommateur pneumatique (4), une pression d'entrée (pE) du moyen de pression (E) pénétrant dans l'agencement d'étranglement (25) ou une pression de compression (p3) sortant du consommateur pneumatique (4) pouvant par exemple être reçue en tant que pression initiale (pV) par l'entrée de commande (26).

7. Installation de régulation de pression (1) pour un véhicule (200) selon l'une des revendications précédentes, **caractérisée en ce que** l'agencement d'étranglement (25) peut être disposé dans une conduite de moyen de pression (23) menant au consommateur pneumatique (4) pour la sortie d'un moyen de pression de sortie (O) à flux volumique limité (QG) au niveau du consommateur pneumatique (4).

8. Installation de régulation de pression (1) selon la revendication 7, **caractérisée en ce qu**'une soupape de commutation (22a, 22b) commandée pneumatiquement ou électriquement est disposée dans la conduite de suralimentation (23) en amont de l'agencement d'étranglement (25) dans le sens d'écoulement du moyen de pression de suralimentation (A), pour la libération du moyen de pression de suralimentation (A), la soupape de commutation (22a, 22b) présentant une section transversale de soupape de commutation (SQ) qui correspond à la section transversale d'agencement (AQ) lorsque toutes les soupapes d'étranglement (31, 27.1) se trouvent dans la position ouverte.

9. Véhicule (200), en particulier voiture particulière (200), comportant une installation de régulation de pression (1) selon l'une des revendications 1 à 8.
